# EUROPÄISCHE PATENTSCHRIFT

(11) **EP 3 612 290 B1**
(45) Veröffentlichungstag und Bekanntmachung des Hinweises auf die Patenterteilung: **10.08.2022**
(21) Anmeldenummer: 18725110.3
(22) Anmeldetag: 17.04.2018
(51) Int. Cl.: B01D 53/06, B01D 53/08, B01D 53/26, E03B 3/28, F24F 3/14

(54) **WASSERGEWINNUNGSVORRICHTUNG UND VERFAHREN ZUR WASSERGEWINNUNG**
WATER EXTRACTION DEVICE AND METHOD FOR EXTRACTING WATER
DISPOSITIF DE RÉCUPÉRATION D'EAU ET PROCÉDÉ DE RÉCUPÉRATION D'EAU

(30) Priorität: 18.04.2017 DE 102017108170
(43) Veröffentlichungstag der Anmeldung: 26.02.2020
(73) Patentinhaber: Hochschule Karlsruhe Technik und Wirtschaft, 76133 Karlsruhe (DE)
(72) Erfinder: LENZ, Bernhard, 76593 Gernsbach (DE); KAUFFELD, Michael, 76879 Ottersheim (DE)
(74) Vertreter: Habermann Intellectual Property Partnerschaft von Patentanwälten mbB
(86) Internationale Anmeldenummer: PCT/EP2018/059731
(87) Internationale Veröffentlichungsnummer: WO 2018/192905

(56) Entgegenhaltungen:
- EP-A1- 1 178 266
- EP-A1- 1 329 381
- EP-A1- 1 705 433
- GB-A- 2 237 373
- US-A1- 2002 035 923
- US-A1- 2005 044 876
- US-A1- 2005 235 827
- US-A1- 2007 028 769

## Beschreibung

Die Erfindung betrifft eine Wassergewinnungsvorrichtung zur Gewinnung von Wasser aus einem Eingangsluftstrom, mit einem Sorptionselement zur Sorption von Wasser aus dem Eingangsluftstrom und zur Abgabe von Wasser an einen durch die Wassergewinnungsvorrichtung geführten Feuchtluftstrom, wobei das Sorptionselement so angeordnet ist, dass es von dem Eingangsluftstrom und dem Feuchtluftstrom durchströmt werden kann, mit einer Wärmezufuhreinrichtung zur Erwärmung des Feuchtluftstroms, bevor dieser das Sorptionselement durchströmt, sodass die Abgabe von Wasser an den Feuchtluftstrom verbessert wird, und mit einer ersten Kondensationsstufe, die einen Kondensator zur Gewinnung von Wasser aus dem Feuchtluftstrom aufweist.

Vorrichtungen und Verfahren zur Gewinnung von Wasser aus einem üblicherweise aus der Umgebungsluft gewonnenen Eingangsluftstrom sind aus dem Stand der Technik bekannt. So offenbaren beispielsweise die Druckschriften US 7,251,945 B2, US 2013/0186118 A1 oder US 2007/0028769 A1 jeweils eine Wassergewinnungsvorrichtung mit einem Sorptionsrad. Einem Abschnitt des Sorptionsrads wird Umgebungsluft zugeführt. Durch einen Adsorptionsvorgang wird Wasser aus der Umgebungsluft in dem betreffenden Abschnitt des Sorptionsrads adsorbiert. Das Sorptionsrad dreht sich, sodass das durch den Adsorptionsvorgang an dem Sorptionsrad befindliche Wasser in einen Luftstrom verbracht wird, der dann getrennt von der Umgebungsluft den mit Wasser angereicherten Abschnitt des Sorptionsrads durchströmt. Der Luftstrom wird zuvor erwärmt, indem der Wassergewinnungsvorrichtung warme Abgasluft zugeführt wird. Der erwärmte Luftstrom durchströmt das Sorptionsrad und entzieht diesem Wasser. Anschließend wird das Wasser durch den Kondensator aus dem Feuchtluftstrom gewonnen.

Diese Wassergewinnungsvorrichtung weist den Nachteil auf, dass eine Aufnahme von Wasser durch den Kondensator erst erfolgen kann, wenn die Temperatur des Luftstroms eine Taupunkttemperatur unterschreitet. Die Taupunkttemperatur bezeichnet diejenige Temperatur eines Luftgemisches, unterhalb deren Wasser aus dem Luftgemisch an Oberflächen beschlägt. Um mit dem Kondensator das Wasser aus dem Luftstrom abscheiden zu können muss der warme Luftstrom heruntergekühlt werden, wozu jedoch sehr viel Energie benötigt wird. Zudem muss der Luftstrom vor dem Durchströmen des Sorptionsrads erwärmt werden, um eine ausreichende Wassermenge aufnehmen zu können. Die Effizienz der Wassergewinnung aus einer Umgebungsluft wird durch die energieintensive Kühlung und Erwärmung des Luftstroms vorgegeben.

Der vorliegenden Erfindung liegt deshalb die Aufgabe zugrunde, eine Wassergewinnungsvorrichtung bereitzustellen, bei der auf eine energieintensive Kühlung des Luftstroms verzichtet werden kann und dennoch eine möglichst effiziente Wassergewinnung aus einem Eingangsluftstrom erfolgen kann.

Die Aufgabe wird durch eine Wassergewinnungsvorrichtung gemäß dem angehängten Anspruch 1 gelöst, die erfindungsgemäß so ausgebildet ist, dass sie einen Kompressor zur Verdichtung des Feuchtluftstroms aufweist, der zwischen dem Sorptionselement und der ersten Kondensationsstufe angeordnet ist und die absolute Feuchtigkeit des verdichteten Feuchtluftstroms erhöht.

Durch die Verdichtung des mit dem aus dem Sorptionselement aufgenommenen Wasser beladenen Feuchtluftstroms wird die absolute Feuchtigkeit des Feuchtluftstroms erhöht und dadurch die nachfolgende Wasserentnahme in der ersten Kondensationsstufe begünstigt. Die absolute Feuchtigkeit des Feuchtluftstroms ist definiert als das Verhältnis der tatsächlich in einer Luftvolumeneinheit enthaltene Wasserdampfmasse zum Volumen. Die Verdichtung beeinflusst auch die relative Feuchtigkeit des Feuchtluftstroms, die definiert ist als das Verhältnis der absoluten Feuchtigkeit zu der maximalen Luftfeuchtigkeit des Feuchtluftstroms.

Weiterhin wird durch die Verdichtung auch die Taupunkttemperatur des Feuchtluftstroms verändert. Durch eine geeignete Vorgabe der Luftmenge des Feuchtluftstroms und dessen Verdichtung vor der ersten Kondensationsstufe kann eine sehr energieeffiziente Wassergewinnung aus der Umgebungsluft erreicht werden.

Der Eingangsluftstrom kann unmittelbar aus der Umgebungsluft angesaugt werden. Der Eingangsluftstrom kann auch aus einem Abluftstrom oder aus einem Fortluftstrom einer Lüftungsanlage oder einer Luftkonditionierungsanlage sein. Es ist ebenfalls möglich, dass die Umgebungsluft oder ein Abluft- bzw. Fortluftstrom vorab in geeigneter Weise konditioniert wird, bevor der daraus erzeugte Eingangsluftstrom der Wassergewinnungsvorrichtung zugeführt wird.

Der Feuchtluftstrom kann auf eine vergleichsweise hohe Temperatur erwärmt werden, bevor er das Sorptionselement durchströmt. Dies ist vorteilhaft, da der Feuchtluftstrom mit einer erhöhten Temperatur mehr Wasser von dem Sorptionselement aufnehmen kann. Bei dem Sorptionselement kann es sich erfindungsgemäß um ein Sorptionsrad handeln. In dem Sorptionsrand kann ein die Adsorption von Wasser begünstigender Feststoff angeordnet sein. Es kann sich aber auch um eine sonstige Einrichtung handeln, die es erlaubt, Wasser aus dem Eingangsluftstrom aufzunehmen und an den Feuchtluftstrom abzugeben. So sind beispielsweise Rieselanlagen bekannt, bei denen eine geeignete Flüssigkeit an einer Oberfläche oder an einer Struktur herunterrieselt und der Eingangsluftstrom an der Oberfläche oder der Struktur vorbeiströmt, sodass Wasser aus dem Eingangsluftstrom an der herunterrieselnden Flüssigkeit absorbiert wird. Der ebenfalls das Sorptionselement durchströmende Feuchtluftstrom nimmt dann sorbiertes Wasser aus dem Sorptionselement auf und transportiert es zu der ersten Kondensationsstufe.

Der Feuchtluftstrom weist gemäß einer vorteilhaften Ausgestaltung des Erfindungsgedankens bei dem Durchgang durch das Sorptionselement eine kleinere Luftmassenströmung als der Eingangsluftstrom auf, vorzugsweise weniger als 50 % und gegebenenfalls weniger als 20 % der Luftmassenströmung des Eingangsluftstroms. Auf diese Weise kann eine höhere relative Feuchtigkeit des Feuchtluftstroms im Vergleich zu der relativen Feuchtigkeit des Eingangsstroms erzielt werden, wodurch die Wassergewinnung begünstigt wird.

Der zwischen dem Sorptionselement und der ersten Kondensationsstufe angeordnete Kompressor dient dazu, den warmen Feuchtluftstrom vor der ersten Kondensationsstufe zu verdichten. Bei dem Kompressor kann es sich erfindungsgemäß um einen durch einen Verbrennungsmotor oder um einen durch einen Elektromotor angetriebenen Kompressor handeln. Ein Kompressor kann beispielsweise auch durch aus der Wassergewinnungsvorrichtung ausgekoppelte Wärmeenergie oder durch Solarenergie betrieben werden.

Im Sinne der vorliegenden Erfindung bezeichnet Kompressor beliebige Verdichter, mit denen eine Verdichtung eines Luftstroms bewirkt werden kann. Geeignete Kompressoren sind beispielsweise Rotationsverdichter, insbesondere Schraubenverdichter oder Turboverdichter. Es können auch zyklisch arbeitende Kompressoren wie beispielsweise Hubkolbenverdichter eingesetzt werden.

Bei dem Kompressor handelt es sich erfindungsgemäß nicht um ein Gebläse, mit welchem im Wesentlichen eine Luftströmung aufrechterhalten oder verstärkt werden soll und dabei eine geringe Verdichtung als Nebeneffekt bewirkt wird. Im Unterschied zu herkömmlichen Gebläsen oder Ventilatoren wird mit dem erfindungsgemäßen Kompressor zwischen der Ansaugseite und der Druckseite ein als Druckverhältnis bezeichneter Quotient von Enddruck durch Saugdruck von mehr als 1,3 und vorzugsweise von mehr als 3 erzielt. Es ist mit geeigneten Kompressoren auch möglich, dass ein Druckverhältnis von mehr als 5 erzielt wird.

Aus dem Kompressor tritt der verdichtete Feuchtluftstrom aus. Bei der ersten Kondensationsstufe kann durch einen Wärmeübertrager Wärme aus dem Feuchtluftstrom entzogen und abgeführt werden. Die abgeführte Wärme kann gegebenenfalls an einer anderen Stelle dem Feuchtluftstrom wieder zugeführt werden, um den Feuchtluftstrom beispielsweise vor dem Durchströmen durch das Sorptionselement aufzuheizen. Die erste Kondensationsstufe kann gegebenenfalls sogar Wasser aus dem Feuchtluftstrom aufnehmen, ohne dass eine energieintensive Kühlung des Feuchtluftstroms auf eine Temperatur deutlich unterhalb der Umgebungstemperatur erforderlich ist.

Einer Ausgestaltung des Erfindungsgedankens zufolge ist es möglich, dass die erste Kondensationsstufe durch einen Kühlfluidstrom gekühlt wird. Der Kühlfluidstrom kann gegebenenfalls aus der Umgebungsluft gewonnen werden, so dass lediglich eine Strömung erzeugt werden muss und auf eine gesonderte Kühlung mit Hilfe eines Kühlmittels oder zusätzlicher Kühlungsenergie verzichtet werden kann. Der Kühlfluidstrom kann auch ein flüssiges oder gasförmiges Wärmeübertragungsmedium aufweisen, mit welchem eine effiziente Kühlung ermöglicht wird.

Erfindungsgemäß kann die Wassergewinnungsvorrichtung mindestens eine Strömungsmaschine aufweisen, die eine Strömungsbewegung des Eingangsluftstroms, des Feuchtluftstroms und/oder Kühlfluidstroms bewirkt oder unterstützt. Bei der Strömungsmaschine handelt es sich gemäß einer bevorzugten Ausführungsform der Erfindung um einen Ventilator oder um eine Turbine.

Die Wärmezufuhreinrichtung der Wassergewinnungsvorrichtung kann erfindungsgemäß als eine Heizeinrichtung ausgebildet sein. Die Heizeinrichtung kann beispielsweise als eine elektrische Heizeinrichtung mit einem Heizleiter, als eine Verbrennungseinrichtung oder als eine sonstige Heizeinrichtung ausgeführt sein. Die Heizeinrichtung kann ebenfalls mit Solarenergie betrieben werden. Alternativ oder zusätzlich zu einer Heizeinrichtung kann die Wärmezufuhreinrichtung als ein Zufuhrkanal ausgebildet sein, durch den dem Feuchtluftstrom Wärme zugeführt werden kann, die beispielsweise an einem anderen Bereich innerhalb der Wassergewinnungsvorrichtung erzeugt und in den Zufuhrkanal eingekoppelt wird. Die Wärme kann dabei beispielsweise mittels eines Wärmeträgermediums übertragen werden. Erfindungsgemäß ist es möglich, dass dem Feuchtluftstrom extern erzeugte Heizluft oder warme Abgasluft zugeführt wird. Ferner kann die Wärmezufuhreinrichtung erfindungsgemäß als ein Wärmeleitelement ausgebildet sein, das mit einer externen Wärmequelle verbindbar ist. Bei der externen Wärmequelle kann es sich beispielsweise um einen Sonnenkollektor oder um eine sonstige externe Wärmequelle handeln.

Mittels der Wassergewinnungsvorrichtung kann eine stationär betreibbare und/oder eine mobile Wassergewinnung aus der Atmosphäre bzw. aus der Umgebungsluft oder aber aus einem bereits in irgend einer Weise konditionierten Abluft- oder Fortluftstrom betrieben werden. Insbesondere ist auch eine Wassergewinnung aus der Abluft von Klimaanlagen oder eine Wasserrückgewinnung bei industriellen Prozessen oder eine Entfeuchtung von industriell genutzten Luftströmen möglich. Weiterhin kann eine Minimierung des Wasserverbrauchs bei der Energieerzeugung oder bei wasserverbrauchenden Verfahren erreicht werden, wie sie beispielsweise bei der Bewässerung in Gewächshäusern eingesetzt werden. Es sind auch andere Anwendungen denkbar, bei denen es auf eine energieeffiziente Wassergewinnung aus einer Luftmenge ankommt.

Es ist besonders bevorzugt, wenn der Feuchtluftstrom durch die Wassergewinnungsvorrichtung in einem Kreislauf geführt wird. Dabei ist es erfindungsgemäß möglich, dass der Feuchtluftstrom in einem geschlossenen Kreislauf geführt wird. Hierbei wird dem Feuchtluftstrom kein zusätzlicher Luftstrom von außen zugeführt und der Feuchtluftstrom kann den geschlossenen Kreislauf nicht verlassen. Dadurch ist eine geeignete und präzise Konditionierung des Feuchtluftstroms in jedem Abschnitt innerhalb des geschlossenen Kreislaufs möglich.

Alternativ ist es möglich, dass der Luftstrom in einem offenen Kreislauf geführt wird. Hierbei kann dem Feuchtluftstrom ein Luftstrom von außen zugeführt werden oder ein Teil des Feuchtluftstroms aus dem Kreislauf abgezweigt werden. Es ist ebenfalls gemäß einer Ausgestaltung des Erfindungsgedankens möglich, dass der Feuchtluftstrom nach einer Wassergewinnung abgeführt und ein neuer Feuchtluftstrom angesaugt wird.

Vorzugsweise steht die erste Kondensationsstufe mit einem Erwärmungsabschnitt des Feuchtluftstroms vor der Wärmezufuhreinrichtung in wärmeleitfähiger Verbindung, wobei der Erwärmungsabschnitt des Feuchtluftstroms der Wärmezufuhreinrichtung in Strömungsrichtung vorhergeht. Bei der Kondensation von Wasser aus dem Feuchtluftstrom entsteht in der ersten Kondensationsstufe Kondensationswärme. Zweckmäßigerweise ist vorgesehen, dass bei einer Kondensation in der ersten Kondensationsstufe die bei einer Abkühlung dem Feuchtluftstrom entnommene Kondensationswärme zur erneuten Erwärmung des Feuchtluftstroms vor dessen Zuführung zu dem Sorptionselement nutzbar wird. Durch die Zuführung der entstehenden Wärme an den Erwärmungsabschnitt kann der Feuchtluftstrom vor einer nachfolgenden Durchströmung des Sorptionselements aufgeheizt werden. Folglich lässt sich zumindest ein Teil der zur Kompression und anschließenden Kondensation des Feuchtluftstroms aufgewandten Energie weiternutzen.

Optional kann ferner die erste Kondensationsstufe zusätzlich gekühlt werden, was den Kondensationsvorgang an dem Kondensator der ersten Kondensationsstufe begünstigt.

Bei dem Erwärmungsabschnitt kann es sich beispielsweise um einen Abschnitt eines Rohrs oder eines Führungskanals handeln, der von dem Feuchtluftstrom durchströmt wird. Gemäß einer Ausgestaltung des Erfindungsgedankens kann die erste Kondensationsstufe mit dem Erwärmungsabschnitt unmittelbar in Verbindung stehen, bzw. der Erwärmungsabschnitt an der Kondensationsstufe vorbeigeführt oder hindurch geführt werden. Die erste Kondensationsstufe kann auch über ein wärmeleitfähiges Element mit dem Erwärmungsabschnitt wärmeleitfähig verbunden sein.

Erfindungsgemäß weist die Wassergewinnungsvorrichtung eine zweite Kondensationsstufe mit einem Kondensator auf, wobei die zweite Kondensationsstufe so angeordnet ist, dass der Feuchtluftstrom sie in Strömungsrichtung nach der ersten Kondensationsstufe durchströmt. Durch die zweite Kondensationsstufe kann erneut Wasser aus dem Feuchtluftstrom gewonnen werden, das noch nicht von dem Kondensator der ersten Kondensationsstufe aus dem Feuchtluftstrom abgeschieden wurde. Ein weiterer Kondensationsvorgang ist deshalb möglich, weil der Feuchtluftstrom beim Erreichen der zweiten Kondensationsstufe im Vergleich zu dem Feuchtluftstrom vor der ersten Kondensationsstufe bereits merklich abgekühlt ist, was den Kondensationsvorgang begünstigt.

Es ist erfindungsgemäß möglich, dass die zweite Kondensationsstufe eine Durchführung für einen Kühlfluidstrom zur Kühlung der zweiten Kondensationsstufe aufweist, um einen Kondensationsvorgang in der zweiten Kondensationsstufe zu unterstützen. Der Kühlfluidstrom kühlt die zweite Kondensationsstufe. Dadurch tritt auch eine weitere Kühlung des Feuchtluftstroms ein, der zwar von dem Kühlfluidstrom isoliert ist, aber über die zweite Kondensationsstufe indirekt gekühlt wird. Dies wiederum begünstigt den Kondensationsvorgang in der zweiten Kondensationsstufe. Der Kühlfluidstrom kann vorgekühlte Luft führen. Es kann sich bei der von dem Kühlfluidstrom geführten Luft jedoch auch um ungekühlte Umgebungsluft handeln, sofern die Temperatur des Feuchtluftstroms zu diesem Zeitpunkt noch höher als die Temperatur der Umgebungsluft ist. Als Kühlfluid kann auch beispielsweise Wasser oder jedes andere geeignete Wärmeträgermedium verwendet werden.

Gemäß der Erfindung weist die Wassergewinnungsvorrichtung eine Expansionsmaschine auf, die so angeordnet ist, dass der Feuchtluftstrom die Expansionsmaschine nach der zweiten Kondensationsstufe durchströmt. Hierdurch wird der Feuchtluftstrom entspannt. Es ist alternativ jedoch auch möglich, dass in der Wassergewinnungsvorrichtung keine Expansionsmaschine vorgesehen ist und der verdichtete Feuchtluftstrom auf eine andere Art und Weise wieder expandieren kann. Falls der Feuchtluftstrom nicht in einem geschlossenen Kreislauf geführt wird, kann der verdichtete Feuchtluftstrom nach der Wassergewinnung auch in verdichtetem Zustand aus der Wassergewinnungsvorrichtung ausgestoßen werden. Vorzugsweise weist die Wassergewinnungsvorrichtung eine dritte Kondensationsstufe mit einem Kondensator auf, wobei die dritte Kondensationsstufe so angeordnet ist, dass der Feuchtluftstrom sie nach der Expansionsmaschine durchströmt. Bei der Dekompression des Feuchtluftstroms kühlt sich dieser weiter zusätzlich zu der Abkühlung des Feuchtluftstroms in der ersten und in der zweiten Kondensationsstufe ab. Bei den zugehörigen Sorptionsvorgängen wurde jeweils Kondensationswärme frei, die an die erste und an die zweite Kondensationsstufe abgegeben wurde. Durch die Expansion des Feuchtluftstroms vor der dritten Kondensationsstufe steigt dessen relative Feuchtigkeit wieder an, sodass dem Feuchtluftstrom auch durch die dritte Kondensationsstufe noch in energieeffizienter Weise Wasser entzogen werden kann.

Gemäß einer bevorzugten Ausführungsform der Erfindung weist die Wassergewinnungsvorrichtung ein Wärmeabgabeelement auf, das so angeordnet ist, dass der Feuchtluftstrom mit dem Wärmeabgabeelement erwärmt werden kann, nachdem der Feuchtluftstrom mindestens eine Kondensationsstufe durchlaufen hat. In besonders vorteilhafter Weise kann zusätzlich vorgesehen sein, dass das Wärmeabgabeelement mit einem an dem Eingangsluftstrom in Strömungsrichtung vor dem Sorptionselement angeordneten Wärmeaufnahmeelement wärmeleitfähig verbunden ist, das so angeordnet ist, dass der Eingangsluftstrom gekühlt und der Feuchtluftstrom erwärmt wird. Durch den Eingangsluftstrom geführtes Wasser kann umso besser durch das Sorptionselement aufgenommen werden, je niedriger die Temperatur des Eingangsluftstroms ist. Deshalb ist es vorteilhaft, wenn der Eingangsluftstrom gekühlt wird, bevor er das Sorptionselement durchströmt. Eine entsprechende Kühlung kann erfindungsgemäß durch das Wärmeabgabeelement und das Wärmeaufnahmeelement erfolgen, die erfindungsgemäß über ein wärmeleitfähiges Element miteinander verbunden sein können. Bevorzugt ist das Wärmeabgabeelement in Durchflussrichtung des Feuchtluftstroms nachfolgend zu der dritten Kondensationsstufe angeordnet.

Eine besonders energieeffiziente Ausgestaltung der erfindungsgemäßen Wassergewinnungsvorrichtung kann dadurch ermöglicht werden, dass der Kompressor und die Expansionsmaschine miteinander in Wirkverbindung stehen, so dass die bei einer Expansion des verdichteten Feuchtluftstroms nutzbar werdende Expansionsenergie energieeffizient zur Verdichtung des Feuchtluftstroms mit dem Kompressor genutzt werden kann. So können beispielsweise der Kompressor und die Expansionsmaschine jeweils eine Turbinenanordnung aufweisen, die durch eine gemeinsame Welle miteinander verbunden sind.

Die vorliegende Erfindung betrifft ferner ein Verfahren zur Wassergewinnung aus einem Eingangsluftstrom gemäß angehängtem Anspruch 10, wobei Wasser aus dem Eingangsluftstrom in einem Sorptionsschritt sorbiert wird, wobei das Wasser anschließend an einen Feuchtluftstrom abgegeben wird, wobei der Feuchtluftstrom vor Abgabe des Wassers an den Feuchtluftstrom in einem Erwärmungsschritt erwärmt wird, sodass die Abgabe von Wasser an den Feuchtluftstrom verbessert wird, und wobei in einem ersten Kondensationsschritt Wasser aus dem Feuchtluftstrom gewonnen wird. Erfindungsgemäß wird der Feuchtluftstrom nach Abgabe des Wassers an den Feuchtluftstrom und vor dem ersten Kondensationsschritt mit einem Kompressor verdichtet. Durch die Verdichtung wird auch eine Temperaturerhöhung des Feuchtluftstroms bewirkt, jedoch kann durch die Verdichtung die relative Feuchtigkeit des Feuchtluftstroms stark erhöht werden, sodass bei der Durchströmung der ersten Kondensationsstufe Wasser abgeschieden werden kann.

Vorzugsweise wird der Feuchtluftstrom dabei in einem gegebenenfalls geschlossenen Kreislauf geführt. Es ist jedoch ebenfalls möglich, den Feuchtluftstrom in einem offenen Kreislauf zu führen oder vor dem Sorptionsschritt anzusaugen und nach einer Wassergewinnung aus dem Feuchtluftstrom wieder abzuführen.

Es ist vorteilhaft, wenn bei dem ersten Kondensationsschritt anfallende Wärme dem Feuchtluftstrom zugeführt wird, unmittelbar bevor der Feuchtluftstrom bei dem Erwärmungsschritt erwärmt wird, sodass bei dem ersten Kondensationsschritt anfallende Wärme zur Erwärmung des Feuchtluftstroms genutzt wird.

Erfindungsgemäß wird aus dem Feuchtluftstrom nach dem ersten Kondensationsschritt in einem zweiten Kondensationsschritt Wasser gewonnen.

Es ist erfindungsgemäß möglich, dass bei dem zweiten Kondensationsschritt einem dem zweiten Kondensationsschritt zugeordneten Kondensator ein Kühlfluidstrom zugeführt wird, um einen Kondensationsvorgang bei dem zweiten Kondensationsschritt zu unterstützen.

Gemäß des Verfahrens der Erfindung wird der Feuchtluftstrom nach dem zweiten Kondensationsschritt entspannt. Vorzugsweise wird aus dem Feuchtluftstrom nach der Entspannung in einem dritten Kondensationsschritt Wasser gewonnen. Gemäß einer weiteren möglichen Ausgestaltungsform des Verfahrens wird ein Wärmestrom aus dem Eingangsluftstrom entnommen und dem Feuchtluftstrom zugeführt, nachdem der Feuchtluftstrom mindestens einem Kondensationsschritt unterworfen gewesen ist, sodass der Eingangsluftstrom gekühlt und der Feuchtluftstrom erwärmt wird. Bevorzugt wird der Wärmestrom dem Feuchtluftstrom erst zugeführt, nachdem der Feuchtluftstrom dem ersten und dem zweiten Kondensationsschritt unterworfen gewesen ist.

Ganz besonders bevorzugt wird der Wärmestrom dem Feuchtluftstrom erst zugeführt, nachdem der Feuchtluftstrom dem ersten, dem zweiten und dem dritten Kondensationsschritt unterworfen gewesen ist.

Gemäß einer optionalen Ausgestaltung des Erfindungsgedankens ist vorgesehen, dass der Feuchtluftstrom nach dem zweiten Kondensationsschritt oder gegebenenfalls nach dem dritten Kondensationsschritt abgeführt und ein neuer Feuchtluftstrom aus dem Eingangsluftstrom oder aus einem Feuchtluftstromreservoir angesaugt wird. Nach dem zweiten oder dritten Kondensationsschritt wurde dem Feuchtluftstrom bereits ein erheblicher Anteil an mitgeführtem Wasser entnommen und der Feuchtluftstrom abgekühlt, sodass der Wassergehalt in der Umgebungsluft oder in der für den Eingangsluftstrom verwendeten Abluft oder Fortluft von Luftbehandlungsanlagen höher sein kann. Ebenfalls kann die Temperatur der Umgebungsluft oder der Abluft, bzw. Fortluft höher als die Temperatur des gekühlten Feuchtluftstroms sein. In Abhängigkeit von den jeweiligen Verfahrensbedingungen kann es dann günstiger sein, die verbrauchte Feuchtluftströmung abzuführen und einen neuen Feuchtluftstrom anzusaugen, der anschließend dem Sorptionselement zugeführt und nachfolgend verdichtet wird. Der neu angesaugte Feuchtluftstrom kann vor einer Zuführung zu dem Sorptionselement zusätzlich erwärmt werden.

Das Verfahren kann mittels der vorangehend beschriebenen Wassergewinnungsvorrichtung durchgeführt werden. Das Verfahren kann erfindungsgemäß jedoch auch auf sonstige Weise bzw. mit anderen konstruktiven Mitteln oder Apparaten durchgeführt werden.

Weitere vorteilhafte Ausgestaltungsformen der Erfindung sind in den Zeichnungen dargestellt. Dabei zeigt:
Fig. 1 eine schematische Darstellung einer erfindungsgemäßen Wassergewinnungsvorrichtung,
Fig. 2 eine schematische Darstellung eines erfindungsgemäßen Verfahrensablaufs zur Wassergewinnung,
Fig. 3 eine schematische Darstellung einer abweichend zu Fig. 1 ausgestalteten erfindungsgemäßen Wassergewinnungsvorrichtung, und
Fig. 4 eine schematische Darstellung einer wiederum abweichend ausgestalteten erfindungsgemäßen Wassergewinnungsvorrichtung.

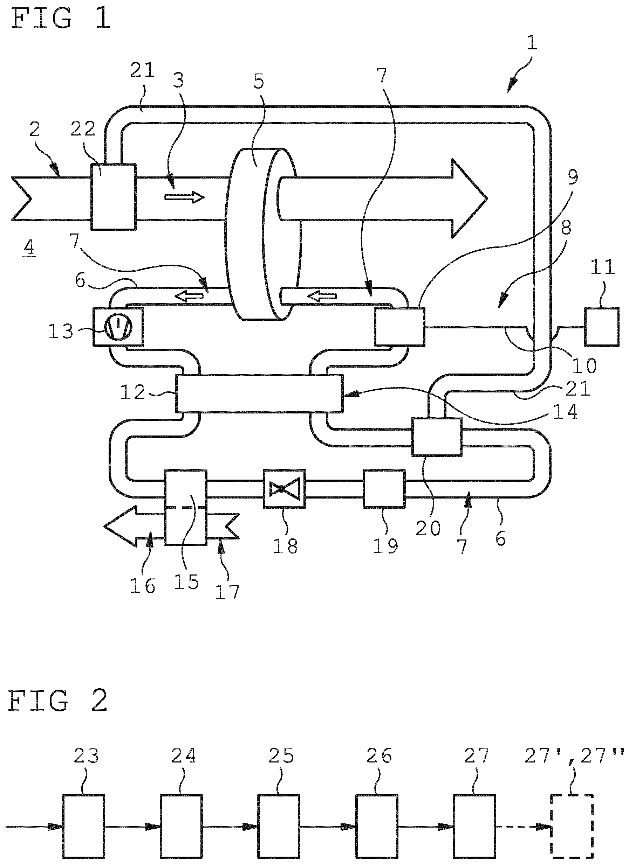

Fig. 1 zeigt eine schematische Darstellung einer erfindungsgemäßen Wassergewinnungsvorrichtung 1. Die Wassergewinnungsvorrichtung 1 weist ein erstes Durchführungsrohr 2 auf, das einen Eingangsluftstrom 3 führt, der durch einen Pfeil symbolisiert wird. Der Eingangsluftstrom 3 speist sich aus Umgebungsluft 4, die die Wassergewinnungsvorrichtung 1 umgibt. Der Eingangsluftstrom 3 könnte abweichend von dem dargestellten Ausführungsbeispiel auch beispielsweise aus der Abluft oder Fortluft einer Lüftungsanlage oder Luftkonditionierungsanlage gespeist werden.

Der Eingangsluftstrom 3 wird innerhalb der Wassergewinnungsvorrichtung 1 durch einen Abschnitt eines Sorptionsrad 5 hindurchgeführt. Der Eingangsluftstrom 3 durchströmt das Sorptionsrad 5, wobei eine Adsorption von Wasser aus dem Eingangsluftstrom 3 an nicht dargestellten Strukturen innerhalb des Sorptionsrads 5 stattfindet. Das Sorptionsrad 5 ist drehbar gelagert und wird durch einen Motor angetrieben. Das Sorptionsrad 5 befindet sich beim Betrieb der Wassergewinnungsvorrichtung 1 in Rotation, sodass der mit adsorbiertem Wasser beladene Abschnitt des Sorptionsrads 5 weitergedreht wird und neue Abschnitte des Sorptionsrads 5 von dem Eingangsluftstrom 3 durchströmt und mit Wasser beladen werden. An Stelle des Sorptionsrads 5 kann auch eine abweichend ausgebildete Absorptionseinrichtung oder allgemein eine Sorptionseinrichtung verwendet werden.

Die Wassergewinnungsvorrichtung 1 weist einen zweiten Führungskanal 6 auf, der einen Feuchtluftstrom 7 führt, der ebenfalls durch einen Pfeil symbolisiert wird. Der Feuchtluftstrom 7 durchströmt ebenfalls das Sorptionsrad 5, wobei der Eingangsluftstrom 3 und der Feuchtluftstrom 7 getrennt voneinander durch das Sorptionsrad 5 geführt werden. Der Feuchtluftstrom 7 wird dabei derart durch das Sorptionsrad 5 geführt, dass der von dem Eingangsluftstrom 3 bereits durchströmte und mit Wasser beladene Abschnitt des Sorptionsrads 5 das adsorbierte Wasser möglichst vollständig an den dann durchströmenden Feuchtluftstrom 7 wieder abgibt.

Der Feuchtluftstrom 7 wird durch eine Wärmezufuhreinrichtung 8 erwärmt, bevor er das Sorptionsrad 5 durchströmt. Die Wärmezufuhreinrichtung 8 wird durch ein Wärmeübertragungselement 9 und ein Wärmeleitelement 10 gebildet. Das Wärmeleitelement 10 ist mit einer externen Wärmequelle 11 wärmeleitfähig verbunden. Der Feuchtluftstrom 7 durchströmt vor dessen Zuführung zu dem Sorptionsrad 5 das Wärmeübertragungselement 9 und kann somit Wärme aus dem Wärmeübertragungselement 9 aufnehmen. Der erwärmte Feuchtluftstrom 7 durchströmt das Sorptionsrad 5 und nimmt über einen Desorptionsvorgang Wasser aus dem Sorptionsrad 5 auf.

Die Wassergewinnungsvorrichtung 1 weist eine erste Kondensationsstufe 12 auf, die einen nicht näher dargestellten Kondensator enthält. Mittels der ersten Kondensationsstufe 12 kann Wasser aus dem Feuchtluftstrom 7 gewonnen werden.

Zwischen der ersten Kondensationsstufe 12 und dem Sorptionsrad 5 ist ein Kompressor 13 angeordnet. Der Kompressor 13 dient dazu, den Feuchtluftstrom 7 zu verdichten. Durch die Verdichtung des Feuchtluftstroms 7 erniedrigt sich die Taupunkttemperatur des mit Wasser beladenen Feuchtluftstroms. Somit kann aus dem Feuchtluftstrom 7 in der nachfolgenden ersten Kondensationsstufe 12 effizient Wasser abgeschieden werden.

Die erste Kondensationsstufe 12 ist wärmeübertragend mit einem Erwärmungsabschnitt 14 des Feuchtluftstroms 7 verbunden, der vor dem Wärmeübertragungselement 9 angeordnet ist. Somit kann der Feuchtluftstrom 7 zusätzlich erwärmt werden, bevor er das Wärmeübertragungselement 9 durchströmt.

Der zweite Führungskanal 6 führt den Feuchtluftstrom 7 nach der ersten Kondensationsstufe 12 einer nachfolgend angeordneten zweiten Kondensationsstufe 15 zu. Der zweiten Kondensationsstufe 15 wird zusätzlich ein Kühlfluidstrom 16 durch einen Kühlkanal 17 zugeführt. Der Kühlfluidstrom 16 kühlt die zweite Kondensationsstufe 15, sodass ein Kondensationsvorgang an der zweiten Kondensationsstufe 15 verbessert wird.

Der zweiten Kondensationsstufe 15 schließen sich eine Expansionsmaschine 18 und eine dritte Kondensationsstufe 19 an. Durch die Expansionsmaschine 18 wird der Feuchtluftstrom 7 entspannt. Hierdurch kühlt der Feuchtluftstrom 7 ab, wodurch ein Kondensationsvorgang in der dritten Kondensationsstufe 19 verbessert wird.

Der Feuchtluftstrom 7 wird durch den zweiten Führungskanal 6 nach Durchströmung der dritten Kondensationsstufe 19 einem Wärmeabgabeelement 20 einer Wärmeübertragungseinrichtung zugeführt. Das Wärmeabgabeelement 20 ist über eine Wärmetransfereinrichtung 21 mit einem Wärmeaufnahmeelement 22 verbunden, das von dem Eingangsluftstrom 3 durchströmt wird. Dem einströmenden Eingangsluftstrom 3 wird von dem Wärmeaufnahmeelement 22 der Wärmeübertragungseinrichtung Wärme entzogen und der Eingangsluftstrom 3 dadurch abgekühlt, während dem Feuchtluftstrom 7 durch das Wärmeabgabeelement 20 Wärme zugeführt wird und der Feuchtluftstrom 7 dadurch erwärmt wird. Durch die Kühlung des Eingangsluftstroms 3 wird die Adsorption von Wasser durch das Sorptionsrad 5 aus dem Eingangsluftstrom 3 verbessert. Die dabei dem Eingangsluftstrom 3 entzogene Wärmeenergie wird durch die Wärmeübertragungseinrichtung zur Erwärmung des Feuchtluftstroms 7 vor der erneuten Durchführung durch das Sorptionsrad 5 genutzt.

Der zweite Führungskanal 6 führt den Feuchtluftstrom 7 innerhalb der Wassergewinnungsvorrichtung 1 in einem geschlossenen Kreislauf.

Fig. 2 zeigt ein schematisches Ablaufdiagramm eines Verfahrens zur Wassergewinnung gemäß der vorliegenden Erfindung. Dabei wird in einem Sorptionsschritt 23 Wasser aus einem Eingangsluftstrom 3 sorbiert. Dies kann erfindungsgemäß mittels eines Sorptionsrads 5 erfolgen. In einem Erwärmungsschritt 24 wird ein Feuchtluftstrom 7 erwärmt, wozu dem Feuchtluftstrom 7 erfindungsgemäß Wärme aus einer externen Wärmequelle 11 zugeführt werden kann. Daraufhin wird das sorbierte Wasser an den erwärmten Feuchtluftstrom 7 in einem Abgabeschritt 25 abgegeben. Anschließend wird der Feuchtluftstrom 7 in einem Verdichtungsschritt 26 verdichtet. Dies kann erfindungsgemäß mittels eines Kompressors 13 erfolgen. Schließlich wird in einem ersten Kondensationsschritt 27 Wasser aus dem Feuchtluftstrom 7 gewonnen. Erfindungsgemäß kann dies mittels eines Kondensators erfolgen. Nach dem ersten Kondensationsschritt 27 können gegebenenfalls zusätzlich zweite und dritte bzw. weitere Kondensationsschritte 27', 27" nacheinander durchlaufen werden.

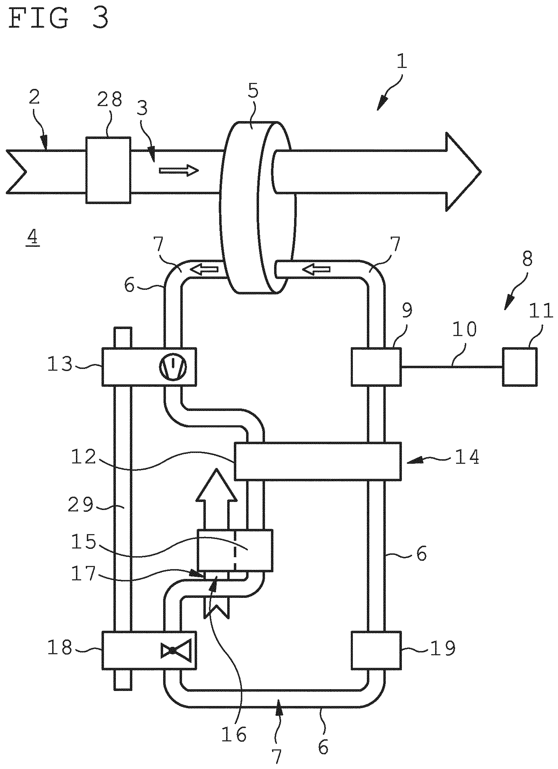

In Fig. 3 ist exemplarisch eine abweichende Ausgestaltung der in Fig. 1 dargestellten erfindungsgemäßen Wassergewinnungsvorrichtung 1 gezeigt. Auf die übereinstimmend ausgestalteten Merkmale wird dabei nachfolgend nicht näher eingegangen. Der Eingangsluftstrom 3 wird durch eine Kühleinrichtung 28 abgekühlt, die nicht mit weiteren Komponenten der Wassergewinnungsvorrichtung 1 in Verbindung steht. Der Kompressor 13 und die Expansionsmaschine 18 sind über eine gemeinsame Welle 29 miteinander verbunden, so dass ein energieeffizienter Betrieb des Kompressors und der Expansionsmaschine 18 ermöglicht wird. Es wäre ebenfalls möglich, den Kompressor 13 und die Expansionsmaschine 18 nicht durch eine mechanische Wirkverbindung miteinander zu verbinden, sondern eine ausschließlich energieübertragende Verbindung vorzusehen.

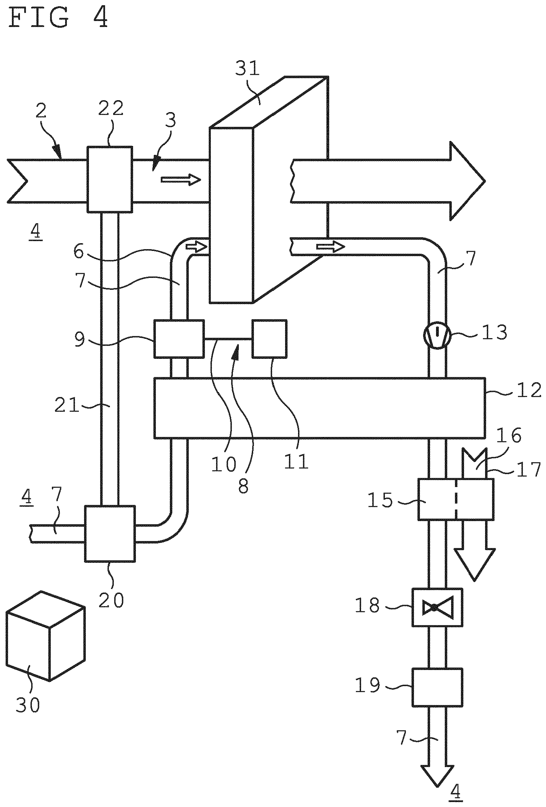

In Fig. 4 ist exemplarisch eine wiederum abweichende Ausgestaltung einer erfindungsgemäßen Wassergewinnungsvorrichtung 1 gezeigt. Der Feuchtluftstrom 7 wird dabei im Gegensatz zu den in Fig. 1 und Fig. 3 gezeigten Ausführungsbeispielen nicht in einem geschlossenen Kreislauf geführt, sondern aus der Umgebungsluft 4 angesaugt. Der Feuchtluftstrom 7 könnte auch aus einem Feuchtluftreservoir 30 angesaugt werden, in welchem vorkonditionierte Feuchtluft gesammelt und bevorratet wird. Der angesaugte Feuchtluftstrom 7 wird zunächst dem Wärmeabgabeelement 20 der Wärmeübertragungseinrichtung zugeführt. Dem einströmenden Eingangsluftstrom 3 wird von dem Wärmeaufnahmeelement 22 der Wärmeübertragungseinrichtung Wärme entzogen und der Eingangsluftstrom 3 dadurch abgekühlt, während dem Feuchtluftstrom 7 durch das Wärmeabgabeelement 20 Wärme zugeführt wird, sodass der angesaugte Feuchtluftstrom 7 erwärmt wird. Anschließend wird der Feuchtluftstrom 7 in dem Erwärmungsabschnitt 14 von der ersten Kondensationsstufe 14 erwärmt, und nachfolgend noch von der Wärmezufuhreinrichtung 8 erwärmt, die von dem Wärmeübertragungselement 9 und dem Wärmeleitelement 10 gebildet wird, das mit der externen Wärmequelle 11 wärmeleitfähig verbunden ist.

Der derart vorgewärmte Feuchtluftstrom 7 wird ebenso wie der aus der Umgebungsluft 4 angesaugte Eingangsluftstrom 3 durch das Sorptionselement geführt, welches als Rieselsorptionsanlage 31 ausgebildet ist. In der Rieselsorptionsanlage 31 rieselt eine Absorptionsflüssigkeit an einer Rieselstruktur herab. Der an der Rieselstruktur vorbeiströmende Eingangsluftstrom 3 gibt Wasser an die Absorptionsflüssigkeit ab. Der Feuchtluftstrom 7 durchströmt die Rieselsorptionsanlage 31 und nimmt an der herabrieselnden Absorptionsflüssigkeit absorbiertes Wasser auf.

Anschließend wird der Feuchtluftstrom 7 in dem Kompressor 13 verdichtet, um dann in der ersten Kondensationsstufe 12 Wasser aus dem Feuchtluftstrom 7 zu entziehen. In der zweiten Kondensationsstufe 15, die durch den Kühlfluidstrom 16 gekühlt wird, wird ebenfalls Wasser dem Feuchtluftstrom 7 entzogen. Nach einer Expansion des Feuchtluftstroms 7 in der Expansionsmaschine 18 wird in einer dritten Kondensationsstufe 19 erneut Wasser entzogen. Der Feuchtluftstrom 7 wird in den Kondensationsstufen 12, 15 und 19 sukzessive entfeuchtet und abgekühlt. Der in der dritten Kondensationsstufe 19 entfeuchtete Feuchtluftstrom 7 wird in die Umgebungsluft 4 abgeführt.

### BEZUGSZEICHENLISTE

1. Wassergewinnungsvorrichtung
2. Erster Führungskanal
3. Eingangsluftstrom
4. Umgebungsluft
5. Sorptionsrad
6. Zweiter Führungskanal
7. Feuchtluftstrom
8. Wärmezufuhreinrichtung
9. Wärmeabgabeelement
10. Wärmeleitelement
11. Externe Wärmequelle
12. Erste Kondensationsstufe
13. Kompressor
14. Erwärmungsabschnitt
15. Zweite Kondensationsstufe
16. Kühlfluidstrom
17. Kühlkanal
18. Expansionsmaschine
19. Dritte Kondensationsstufe
20. Wärmeabgabeelement
21. Wärmetransfereinrichtung
22. Wärmeaufnahmeelement
23. Sorptionsschritt
24. Erwärmungsschritt
25. Abgabeschritt
26. Verdichtungsschritt
27. Erster Kondensationsschritt
27'. Zweiter Kondensationsschritt
27". Dritter Kondensationsschritt
28. Kühleinrichtung
29. Welle
30. Feuchtluftreservoir
31. Rieselsorptionsanlage

## Patentansprüche

1. Wassergewinnungsvorrichtung (1) zur Gewinnung von Wasser aus einem Eingangsluftstrom (3),
- mit einem Sorptionselement zur Sorption von Wasser aus dem Eingangsluftstrom (3) und zur Abgabe von Wasser an einen durch die Wassergewinnungsvorrichtung (1) geführten Feuchtluftstrom (7), wobei das Sorptionselement so angeordnet ist, dass es von dem Eingangsluftstrom (3) und den Feuchtluftstrom (7) durchströmt werden kann,
- mit einer Wärmezufuhreinrichtung (8) zur Erwärmung des Feuchtluftstroms (7), bevor dieser das Sorptionselement durchströmt, sodass die Abgabe von Wasser an den Feuchtluftstrom (7) verbessert wird, und
- mit einer ersten Kondensationsstufe (12), die einen Kondensator zur Gewinnung von Wasser aus dem Feuchtluftstrom (7) aufweist,
**dadurch gekennzeichnet, dass** die Wassergewinnungsvorrichtung (1) einen Kompressor (13) zur Verdichtung des Feuchtluftstroms (7) aufweist, der zwischen dem Sorptionselement und der ersten Kondensationsstufe (12) angeordnet ist und die absolute Feuchtigkeit des verdichteten Feuchtluftstroms (7) erhöht, wobei der Kompressor (13) zwischen einer Ansaugseite und einer Druckseite des Kompressors (13) ein als Druckverhältnis bezeichneten Quotienten von Enddruck durch Saugdruck von mehr als 1,3 erzielt, dass die Wassergewinnungsvorrichtung (1) eine zweite Kondensationsstufe (15) mit einem Kondensator aufweist, wobei die zweite Kondensationsstufe (15) so angeordnet ist, dass der Feuchtluftstrom (7) sie in Strömungsrichtung nach der ersten Kondensationsstufe (12) durchströmt, und dass die Wassergewinnungsvorrichtung (1) eine Expansionsmaschine (18) aufweist, die so angeordnet ist, dass der Feuchtluftstrom (7) die Expansionsmaschine (18) nach der zweiten Kondensationsstufe (15) durchläuft.

2. Wassergewinnungsvorrichtung (1) nach Anspruch 1, **dadurch gekennzeichnet, dass** der Kompressor (13) ein Druckverhältnis von mehr als 3, vorzugsweise von mehr als 5 erzielt.

3. Wassergewinnungsvorrichtung (1) nach einem der vorhergehenden Ansprüche, **dadurch gekennzeichnet, dass** der Feuchtluftstrom (7) durch die Wassergewinnungsvorrichtung (1) in einem geschlossenen Kreislauf geführt wird.

4. Wassergewinnungsvorrichtung (1) nach einem der vorhergehenden Ansprüche, **dadurch gekennzeichnet, dass** die erste Kondensationsstufe (12) mit einem Erwärmungsabschnitt (14) des Feuchtluftstroms (7) vor der Wärmezufuhreinrichtung (8) in wärmeleitfähiger Verbindung steht, wobei der Erwärmungsabschnitt (14) des Feuchtluftstroms (7) der Wärmezufuhreinrichtung (8) in Strömungsrichtung vorangeht, sodass bei einer Kondensation in der ersten Kondensationsstufe (12) entstehende Wärme zur Erwärmung des Feuchtluftstroms (7) nutzbar wird.

5. Wassergewinnungsvorrichtung (1) nach einem der vorhergehenden Ansprüche, **dadurch gekennzeichnet, dass** die zweite Kondensationsstufe (15) eine Durchführung für einen Kühlfluidstrom (16) zur Kühlung der Zweiten Kondensationsstufe (15) aufweist, um einen Kondensationsvorgang in der zweiten Kondensationsstufe (15) zu unterstützen.

6. Wassergewinnungsvorrichtung (1) nach einem der vorhergehenden Ansprüche, **dadurch gekennzeichnet, dass** die Wassergewinnungsvorrichtung (1) eine dritte Kondensationsstufe (19) mit einem Kondensator aufweist, wobei die dritte Kondensationsstufe (19) so angeordnet ist, dass der Feuchtluftstrom (7) sie nach der Expansionsmaschine (18) durchströmt.

7. Wassergewinnungsvorrichtung (1) nach einem der vorhergehenden Ansprüche, **dadurch gekennzeichnet, dass** die Wassergewinnungsvorrichtung (1) ein Wärmeabgabeelement (20) aufweist, das so angeordnet ist, dass der Feuchtluftstrom (7) mit dem Wärmeabgabeelement (20) erwärmt werden kann, nachdem der Feuchtluftstrom (7) mindestens eine Kondensationsstufe durchlaufen hat.

8. Wassergewinnungsvorrichtung (1) nach Anspruch 7, **dadurch gekennzeichnet, dass** das Wärmeabgabeelement (20) mit einem an dem Eingangsluftstrom (3) in Strömungsrichtung vor dem Sorptionselement angeordneten Wärmeaufnahmeelement (22) wärmeleitfähig verbunden ist, das so angeordnet ist, dass der Eingangsluftstrom (3) mit dem Wärmeaufnahmeelement (22) gekühlt und der Feuchtluftstrom (7) mit dem Wärmeabgabeelement (20) erwärmt wird.

9. Wassergewinnungsvorrichtung (1) nach einem der vorhergehenden Ansprüche, **dadurch gekennzeichnet, dass** der Kompressor (13) und die Expansionsmaschine (18) miteinander in Wirkverbindung stehen, sodass die bei einer Expansion des verdichteten Feuchtluftstroms (7) nutzbar werdende Expansionsenergie energieeffizient zur Verdichtung des Feuchtluftstroms (7) mit dem Kompressor (13) genutzt werden kann.

10. Verfahren zur Wassergewinnung aus einem Eingangsluftstrom (3),
- wobei Wasser aus dem Eingangsluftstrom (3) in einem Sorptionsschritt (23) sorbiert wird,
- wobei das Wasser anschließend an einen Feuchtluftstrom (7) abgegeben wird,
- wobei der Feuchtluftstrom (7) in einem Erwärmungsschritt (24) vor Abgabe des Wassers an den Feuchtluftstrom (7) erwärmt wird, sodass die Abgabe von Wasser an den Feuchtluftstrom (7) verbessert wird, und
- wobei in einem ersten Kondensationsschritt (27) Wasser aus dem Feuchtluftstrom (7) gewonnen wird, **dadurch gekennzeichnet, dass** der Feuchtluftstrom (7) nach Abgabe des Wassers an den Feuchtluftstrom (7) und vor dem ersten Kondensationsschritt (27) mit einem Kompressor (13) verdichtet wird, wobei der Feuchtluftstrom (7) mit dem Kompressor (13) mehr als 1,3-fach verdichtet wird, aus dem Feuchtluftstrom (7) nach dem ersten Kondensationsschritt (27) in einem zweiten Kondensationsschritt (27') Wasser gewonnen wird, und dass der Feuchtluftstrom (7) nach dem zweiten Kondensationsschritt (27') entspannt wird.

11. Verfahren nach Anspruch 10, **dadurch gekennzeichnet, dass** der Feuchtluftstrom (7) in einem geschlossenen Kreislauf geführt wird.

12. Verfahren nach einem der Ansprüche 10 oder 11, **dadurch gekennzeichnet, dass** bei dem ersten Kondensationsschritt (27) anfallende Wärme dem Feuchtluftstrom (7) zugeführt wird, unmittelbar bevor der Feuchtluftstrom (7) bei dem Erwärmungsschritt (24) erwärmt wird, sodass bei dem ersten Kondensationsschritt (27) anfallende Wärme zur Erwärmung des Feuchtluftstroms (7) genutzt wird.

13. Verfahren nach einem der Ansprüche 10 bis 12, **dadurch gekennzeichnet, dass** bei dem zweiten Kondensationsschritt (27') einem dem zweiten Kondensationsschritt (27') zugeordneten Kondensator ein Kühlfluidstrom (16) zugeführt wird, um einen Kondensationsvorgang bei dem zweiten Kondensationsschritt (27') zu unterstützen.

14. Verfahren nach einem der Ansprüche 10 bis 13, **dadurch gekennzeichnet, dass** aus dem Feuchtluftstrom (7) nach der Entspannung in einem dritten Kondensationsschritt (27") Wasser gewonnen wird.

15. Verfahren nach einem der Ansprüche 10 bis 14, **dadurch gekennzeichnet, dass** Wärme von dem Eingangsluftstrom (3) in den Feuchtluftstrom (7) überführt wird, nachdem der Feuchtluftstrom (7) mindestens einem Kondensationsschritt unterworfen gewesen ist, sodass der Eingangsluftstrom (3) gekühlt und der Feuchtluftstrom (7) erwärmt wird.

16. Verfahren nach einem der Ansprüche 10 bis 15, **dadurch gekennzeichnet, dass** der Feuchtluftstrom (7) nach dem zweiten Kondensationsschritt (27') oder gegebenenfalls n1ch dem dritten Kondensationsschritt (27") abgeführt und ein neuer Feuchtluftstrom (7) aus dem Eingangsluftstrom (3) oder aus einem Feuchtluftstromreservoir (30) angesaugt wird.

## Claims

1. Water extraction device (1) for extracting water from an inlet air stream (3),
- comprising a sorption element for the sorption of water from the inlet air stream (3) and for releasing water to a moisture-laden air stream (7) that is conducted through the water extraction device (1), wherein the sorption element is arranged in such a way that the inlet air stream (3) and the moisture-laden air stream (7) can flow through it,
- comprising a heat supply device (8) for heating the moisture-laden air stream (7) before it flows through the sorption element such that the release of water to the moisture-laden air stream (7) is improved, and
- comprising a first condensation stage (12) having a condenser for extracting water from the moisture-laden air stream (7),
**characterised in that**
the water extraction device (1) comprises a compressor (13) for compressing the moisture-laden air stream (7), which is arranged between the sorption element and the first condensation stage (12) and increases the absolute humidity of the compressed moisture-laden air stream (7), wherein between an intake side and a pressure side of the compressor (13) the compressor (13) achieves a quotient of final pressure divided by suction pressure, designated as the pressure ratio, of more than 1.3,
the water extraction device (1) comprises a second condensation stage (15) having a condenser, wherein the second condensation stage (15) is arranged in such a way that the moisture-laden air stream (7) flows through it in the flow direction after the first condensation stage (12), and
the water extraction device (1) comprises an expansion machine (18), which is arranged in such a way that the moisture-laden air stream (7) flows through the expansion machine (18) after the second condensation stage (15).

2. Water extraction device (1) according to claim 1, **characterised in that** the compressor (13) achieves a pressure ratio of more than 3, preferably more than 5.

3. Water extraction device (1) according to one of the preceding claims, **characterised in that** the moisture-laden air stream (7) is conducted through the water extraction device (1) in a closed circuit.

4. Water extraction device (1) according to one of the preceding claims, **characterised in that** the first condensation stage (12) is connected for heat conduction to a heating section (14) of the moisture-laden air stream (7) upstream of the heat supply device (8), wherein the heating section (14) of the moisture-laden air stream (7) is positioned upstream of the heat supply device (8) in the flow direction, such that heat formed during a condensation in the first condensation stage (12) becomes available for use to heat the moisture-laden air stream (7).

5. Water extraction device (1) according to one of the preceding claims, **characterised in that** the second condensation stage (15) comprises a passage for a cooling fluid stream (16) for cooling the second condensation stage (15) in order to support a condensation process in the second condensation stage (15).

6. Water extraction device (1) according to one of the preceding claims, **characterised in that** the water extraction device (1) comprises a third condensation stage (19) with a condenser, wherein the third condensation stage (19) is arranged in such a way that the moisture-laden air stream (7) flows through it downstream of the expansion machine (18).

7. Water extraction device (1) according to one of the preceding claims, **characterised in that** the water extraction device (1) comprises a heat releasing element (20), which is arranged in such a way that the moisture-laden air stream (7) can be heated by the heat releasing element (20) once the moisture-laden air stream (7) has flowed through at least one condensation stage.

8. Water extraction device (1) according to claim 7, **characterised in that** the heat releasing element (20) is connected for heat conduction to a heat absorbing element (22) arranged in the inlet air stream (3) upstream of the sorption element in the flow direction, wherein the heat absorbing element (22) is arranged in such a way that the inlet air stream (3) is cooled by the heat absorbing element (22) and the moisture-laden air stream (7) is heated by the heat releasing element (20).

9. Water extraction device (1) according to one of the preceding claims, **characterised in that** the compressor (13) and the expansion machine (18) are operatively interconnected, such that if the compressed moisture-laden air stream (7) is expanded, the expansion energy that becomes available for use can be used in an energy-efficient manner for compression of the moisture-laden air stream (7) with the compressor (13).

10. Method for extracting water from an inlet air stream (3),
- wherein water is sorbed from the inlet air stream (3) in a sorption step (23),
- wherein the water is then released to a moisture-laden air stream (7),
- wherein the moisture-laden air stream (7) is heated in a heating step (24) before the water is released to the moisture-laden air stream (7), such that the release of water to the moisture-laden air stream (7) is improved, and
- wherein in a first condensation step (27) water is extracted from the moisture-laden air stream (7), **characterised in that** after the release of the water to the moisture-laden air stream (7) and before the first condensation step (27), the moisture-laden air stream (7) is compressed with a compressor (13), wherein the moisture-laden air stream (7) is compressed with the compressor (13) by more than 1.3 times,
after the first condensation step (27) water is extracted from the moisture-laden air stream (7) in a second condensation step (27'), and
after the second condensation step (27') the moisture-laden air stream (7) is expanded.

11. Method according to claim 10, **characterised in that** the moisture-laden air stream (7) is conducted in a closed circuit.

12. Method according to one of claims 10 or 11, **characterised in that** heat arising in the first condensation step (27) is supplied to the moisture-laden air stream (7) immediately before the moisture-laden air stream (7) is heated in the heating step (24), such that heat arising in the first condensation step (27) is used to heat the moisture-laden air stream (7).

13. Method according to one of claims 10 to 12, **characterised in that** in the second condensation step (27') a cooling fluid stream (16) is supplied to a condenser assigned to the second condensation step (27') in order to support a condensation process in the second condensation step (27').

14. Method according to one of claims 10 to 13, **characterised in that** after the expansion, water is extracted from the moisture-laden air stream (7) in a third condensation step (27") .

15. Method according to one of claims 10 to 14, **characterised in that** heat from the inlet air stream (3) is transferred to the moisture-laden air stream (7) once the moisture-laden air stream (7) has undergone at least one condensation step, such that the inlet air stream (3) is cooled and the moisture-laden air stream (7) is heated.

16. Method according to one of claims 10 to 15, **characterised in that** after the second condensation step (27') or where applicable after the third condensation step (27''), the moisture-laden air stream (7) is discharged and a new moisture-laden air stream (7) is drawn in from the inlet air stream (3) or from a moisture-laden air stream reservoir (30).

## Revendications

1. Dispositif de récupération d'eau (1) pour récupérer de l'eau provenant d'un flux d'air d'entrée (3),
- avec un élément de sorption destiné à la sorption de l'eau provenant du flux d'air d'entrée (3) et destiné à distribuer de l'eau à un flux d'air humide (7) guidé à travers le dispositif de récupération d'eau (1), dans lequel l'élément de sorption est disposé de telle sorte qu'il peut être traversé par le flux d'air d'entrée (3) et le flux d'air humide (7),
- avec un système d'amenée de chaleur (8) destiné à chauffer le flux d'air humide (7) avant que celui-ci ne traverse l'élément de sorption si bien que la distribution d'eau au flux d'air humide (7) est améliorée, et
- avec un premier étage de condensation (12), qui présente un condensateur pour récupérer de l'eau provenant du flux d'air humide (7),
**caractérisé en ce que**
le dispositif de récupération d'eau (1) présente un compresseur (13) pour comprimer le flux d'air humide (7), qui est disposé entre l'élément de sorption et le premier étage de condensation (12) et augmente l'humidité absolue du flux d'air humide (7) comprimé, dans lequel le compresseur (13) atteint, entre un côté d'aspiration et un côté de pression du compresseur (13), un quotient désigné en tant que rapport de pression de la pression finale par la pression d'aspiration supérieur à 1,3, que le dispositif de récupération d'eau (1) présente un deuxième étage de condensation (15) avec un condensateur, dans lequel le deuxième étage de condensation (15) est disposé de telle sorte que le flux d'air humide (7) le traverse dans la direction d'écoulement après le premier étage de condensation (12), et que le dispositif de récupération d'eau (1) présente une machine d'expansion (18) qui est disposée de telle sorte que le flux d'air humide (7) traverse la machine d'expansion (18) après le deuxième étage de condensation (15).

2. Dispositif de récupération d'eau (1) selon la revendication 1, **caractérisé en ce que** le compresseur (13) atteint un rapport de pression supérieur à 3, de préférence supérieur à 5.

3. Dispositif de récupération d'eau (1) selon l'une quelconque des revendications précédentes, **caractérisé en ce que** le flux d'air humide (7) est guidé à travers le dispositif de récupération d'eau (1) dans un circuit fermé.

4. Dispositif de récupération d'eau (1) selon l'une quelconque des revendications précédentes, **caractérisé en ce que** le premier étage de condensation (12) est relié de manière thermoconductrice à une section de chauffage (14) du flux d'air humide (7) devant le système d'amenée de chaleur (8), dans lequel la section de chauffage (14) du flux d'air humide (7) précède le système d'amenée de chaleur (8) dans la direction d'écoulement si bien que de la chaleur se formant lors d'une condensation dans le premier étage de condensation (12) peut être utilisée pour chauffer le flux d'air humide (7) .

5. Dispositif de récupération d'eau (1) selon l'une quelconque des revendications précédentes, **caractérisé en ce que** le deuxième étage de condensation (15) présente un passage pour un flux de fluide de refroidissement (16) destiné au refroidissement du deuxième étage de condensation (15) pour soutenir un processus de condensation dans le deuxième étage de condensation (15).

6. Dispositif de récupération d'eau (1) selon l'une quelconque des revendications précédentes, **caractérisé en ce que** le dispositif de récupération d'eau (1) présente un troisième étage de condensation (19) avec un condensateur, dans lequel le troisième étage de condensation (19) est disposé de telle sorte que le flux d'air humide (7) le traverse après la machine d'expansion (18).

7. Dispositif de récupération d'eau (1) selon l'une quelconque des revendications précédentes, **caractérisé en ce que** le dispositif de récupération d'eau (1) présente un élément de distribution de chaleur (20) qui est disposé de telle sorte que le flux d'air humide (7) peut être chauffé avec l'élément de distribution de chaleur (20) après que le flux d'air humide (7) a traversé au moins un étage de condensation.

8. Dispositif de récupération d'eau (1) selon la revendication 7, **caractérisé en ce que** l'élément de distribution de chaleur (20) est relié de manière thermoconductrice à un élément d'absorption de chaleur (22) disposé devant l'élément de sorption sur le flux d'air d'entrée (3) dans la direction d'écoulement, lequel est disposé de telle sorte que le flux d'air d'entrée (3) est refroidi avec l'élément d'absorption de chaleur (22) et le flux d'air humide (7) est chauffé avec l'élément de distribution de chaleur (20).

9. Dispositif de récupération de chaleur (1) selon l'une quelconque des revendications précédentes, **caractérisé en ce que** le compresseur (13) et la machine d'expansion (18) coopèrent l'un avec l'autre si bien que l'énergie d'expansion devenant utilisable lors d'une expansion du flux d'air humide (7) comprimé peut être utilisée avec une efficacité énergétique pour comprimer le flux d'air humide (7) avec le compresseur (13).

10. Procédé de récupération d'eau à partir d'un flux d'air d'entrée (3),
- dans lequel de l'eau provenant du flux d'air d'entrée (3) est sorbée lors d'une étape de sorption (23),
- dans lequel l'eau est distribuée ensuite à un flux d'air humide (7),
- dans lequel le flux d'air humide (7) est chauffé lors d'une étape de chauffage (24) avant la distribution de l'eau au flux d'air humide (7) si bien que la distribution d'eau au flux d'air humide (7) est améliorée, et
- dans lequel de l'eau est obtenue à partir du flux d'air humide (7) lors d'une première étape de condensation (27), **caractérisé en ce que** le flux d'air humide (7) est comprimé avec un compresseur (13) après la distribution de l'eau au flux d'air humide (7) et avant la première étape de condensation (27), dans lequel le flux d'air humide (7) est condensé avec le compresseur (13) plus de 1,3 fois, de l'eau est récupérée du flux d'air humide (7) après la première étape de condensation (27) lors d'une deuxième étape de condensation (27'), et que le flux d'air humide (7) est détendu après la deuxième étape de condensation (27').

11. Procédé selon la revendication 10, **caractérisé en ce que** le flux d'air humide (7) est guidé dans un circuit fermé.

12. Procédé selon l'une quelconque des revendications 10 ou 11, **caractérisé en ce que** de la chaleur apparaissant lors de la première étape de condensation (27) est amenée au flux d'air humide (7) directement avant que le flux d'air humide (7) ne soit chauffé lors de l'étape de chauffage (24) si bien que de la chaleur apparaissant lors de la première étape de condensation (27) est utilisée pour chauffer le flux d'air humide (7).

13. Procédé selon l'une quelconque des revendications 10 à 12, **caractérisé en ce qu'**un flux de fluide de refroidissement (16) est amené lors de la deuxième étape de condensation (27') à un condensateur associé à la deuxième étape de condensation (27') pour soutenir un processus de condensation lors de la deuxième étape de condensation (27').

14. Procédé selon l'une quelconque des revendications 10 à 13, **caractérisé en ce que** de l'eau est récupérée lors d'une troisième étape de condensation (27") du flux d'air humide (7) après la détente.

15. Procédé selon l'une quelconque des revendications 10 à 14, **caractérisé en ce que** de la chaleur est transférée depuis le flux d'air d'entrée (3) dans le flux d'air humide (7) après que le flux d'air humide (7) a été soumis à au moins une étape de condensation si bien que le flux d'air d'entrée (3) est refroidi et le flux d'air humide (7) est chauffé.

16. Procédé selon l'une quelconque des revendications 10 à 15, **caractérisé en ce que** le flux d'air humide (7) est évacué après la deuxième étape de condensation (27') ou éventuellement après la troisième étape de condensation (27") et un nouveau flux d'air humide (7) est aspiré depuis le flux d'air d'entrée (3) ou depuis un réservoir de flux d'air humide (30) .
